## Europäisches Patentamt
## European Patent Office
## Office européen des brevets

(19)

(11) Veröffentlichungsnummer: **0 103 293**
**B1**

(12) **EUROPÄISCHE PATENTSCHRIFT**

(45) Veröffentlichungstag der Patentschrift:
09.08.89

(21) Anmeldenummer: 83108969.3

(22) Anmeldetag: 10.09.83

(51) Int. Cl.⁴: **H 04 Q 11/04**, H 04 M 11/06,
H 04 B 9/00, H 04 N 7/00

(54) Integriertes Nachrichtensystem.

(30) Priorität: 14.09.82 DE 3233958

(43) Veröffentlichungstag der Anmeldung:
21.03.84 Patentblatt 84/12

(45) Bekanntmachung des Hinweises auf die Patenterteilung: 09.08.89 Patentblatt 89/32

(84) Benannte Vertragsstaaten:
AT DE FR GB IT NL SE

(56) Entgegenhaltungen:
TELCOM REPORT, Band 6, Heft 2, April 1983, Seiten
63-68, Passau, DE; B. SCHAFFER: "BIGFON - VER-
MITTLUNGS- UND VERTEILTECHNIK"
INTERNATIONAL SWITCHING SYMPOSIUM, 21.-25.
September 1981, Sitzung 42C, Heft 4, Seiten 1-5,
Montreal, CA; G. WIEST et al.: "An integrated service
broadband network for voice, text, data and video"
IDEM
INTERNATIONAL SWITCHING SYMPOSIUM, 21.-25.
September 1981, Sitzung 22B, Heft 1, Seiten 1-8,
Montreal, CA; J.G. DUPIEUX et al.: "The application
of fiber optics to the introduction of new services in
local networks"
IDEM
TELCOM REPORT, Band 5, Heft 2, April 1982, Seiten
123-129, Passau, DE; E. BRAUN: "BIGFON - DER
START FÜR DIE KOMMUNIKATIONSTECHNIK DER
ZUKUNFT"
PROCEEDINGS OF THE IEEE, Band 68, Nr. 10, Oktober 1980, Seiten 1291-1299, IEEE, New York, US; K.Y.
CHANG: "Fiberguide systems in the subscriber
loop"

(73) Patentinhaber: ALCATEL N.V.
Strawinskylaan 537 (World Trade Center)
NL-1077 XX Amsterdam (NL)
FR GB IT NL SE AT
Standard Elektrik Lorenz Aktiengesellschaft
Hellmuth-Hirth-Strasse 42
D-7000 Stuttgart 40 (DE)
DE

(72) Erfinder: Böttle, Dietrich, Dipl.-Ing.
Buchenweg 14
D-7335 Salach (DE)
Erfinder: Siegel, Herbert
Starenweg 5
D-7357 Ditzingen 5 (DE)
Erfinder: Schmidt, Peter, Dipl.-Ing.
Am Vogelherd 14
D-7000 Stuttgart 31 (DE)

(74) Vertreter: Beck-Seyffer, Karl Heinz, Dipl.-Ing. et al
Standard Elektrik Lorenz AG Patent- und Lizenzwesen Postfach 30 09 29
D-7000 Stuttgart 30 (DE)

EP 0 103 293 B1

## Beschreibung

Die Erfindung betrifft ein integriertes Nachrichtensystem, nach dem Oberbegriff des Hauptanspruchs.

Bei einem bekannten integrierten Nachrichtensystem werden das Breitband-Vermittlungsnetz, das ein in einer Fernsprechzentrale installiertes Videokoppelfeld für Bildkommunikation einschließt, und das Breitband-Verteilkoppelnetz, das ein in der Fernsprechzentrale installiertes Videokoppelfeld für Fernsehsignale aufweist, von der Steuerung der Fernsprechvermittlung mitgesteuert (DE-PS 25 38 638). Diese muß dafür vorgesehen und ausgebaut sein, was einen beachtlichen Aufwand erfordert. Außerdem sind spezielle Zeichengabeeinrichtungen, Protokolle und Prozeduren erforderlich. Für den Austausch schmalbandiger und breitbandiger Ton- und Datensignale sind die einzelnen Teilnehmereinrichtungen mit der Fernsprechvermittlung und mit den videokoppelfeldern über je zwei Glasfasern, gesondert für die Sende- und die Empfangsrichtung, verbunden, über die die verschiedenen Nachrichtensignale jeweils in einer Richtung im Zeitmultiplex übertragen werden. Die hohe Übertragungskapazität der Lichtleitfasern wird dabei nicht ausreichend ausgenutzt.

Ein anderes integriertes Nachrichtensystem ist aus International Switching Symposium, 21.-25. September 1981, Sitzung 42C, Heft 4, Seiten 1-5, Montreal, CA ; G. Wiest et al. : « An integrated service broadband network for voice, text, data and video » bekannt. Dieses Nachrichtensystem verwendet in der vermittlung, wie die dortige Figur 5 zeigt, eine zentrale Steuerung, durch die über ein separates Steuernetzwerk sämtliche Anschlußbaugruppen und Koppelfelder gesteuert werden. Zentrale Steuerungen werden von nicht wenigen Fachleuten abgelehnt, weil sie im Hinblick auf Sicherheit und Zuverlässigkeit höheren Aufwand erfordern. Eine Übertragungsmöglichkeit auf vermittlungsstellen mit räumlich verteilter Steuerung ist nicht erkennbar.

Verschiedene weitere Nachrichtensysteme sind in International Switching Symposium, 21.-25. September 1981, Sitzung 22B, Heft 1, Seiten 1-8, Montreal, CA ; J. G. Dupieux et al. : « The application of fiber optics to the introduction of new services in local networks » angedeutet. Das anhand der dortigen Figur 5 näher beschriebene System weist aber eine sehr weitgehende Trennung der verschiedenen Dienste voneinander auf. Eine Steuerung über Signalisierungskanäle von den Teilnehmern aus ist angedeutet. Der dort auf Seite 7, linke Spalte, vorletzter Absatz erwähnte « pragmatic approach aiming at a minimization of software development » ist allenfalls für einen Feldversuch akzeptabel.

Der Erfindung liegt die Aufgabe zugrunde, ein integriertes Nachrichtennetz zu schaffen, das die vorhandene Kommunikationsinfrastruktur mit ausnutzt und damit den Aufwand für die breitbandige Nachrichtenübertragung verringert.

Diese Aufgabe wird erfindungsgemäß durch ein integriertes Nachrichtensystem nach der Lehre des Hauptanspruchs gelöst.

Vorteilhafte Weiterbildungen der Erfindung sind in den Unteransprüchen gekennzeichnet.

Die Vorteile der Erfindung Liegen insbesondere darin, daß die in bestehenden oder in absehbarer Zeit einzurichtenden digitalen Nachrichtennetzen vorhandenen Einrichtungen für neue Breitband-Vermittlungsnetze- und Verteilnetze mit benutzt werden. Es sind keine speziellen Zeichengabeund Steuereinrichtungen dafür erforderlich. Die übermittlungsprotokolle und -Prozeduren sind einheitlich. Damit verbessert sich die Wirtschaftlichkeit des gesamten Fernmeldenetzes.

Ein Ausführungsbeispiel der Erfindung wird im folgenden anhand der Zeichnung erläutert. Es zeigen :

Figur 1 den Anschluß von Breitband-Koppelnetzen an eine Digital-Vermittlungsstelle in einem erfindungsgemäßen Nachrichtensystem und

Figur 2 einen Anschlußbaustein in einer Digital-Vermittlungsstelle, der die Steuereinrichtungen für ein Bildfernsprech-Koppelnetz in einem integrierten Nachrichtensystem gemäß Figur 1 enthält.

An ein Schmalband-Koppelnetz 1 einer modernen digitalen Vermittlungsstelle, z. B. einer Vermittlungsstelle System 12, sind mehrere sogenannte Anschlußbausteine oder Module angeschlossen (vgl. z. B. Elektrisches Nachrichtenwesen Band 56, Nr. 2/3, 1981, seite 136), von denen in der Zeichnung ein Modul 2 zum Anschluß digitaler Teilnehmer, ein Modul 3 zur Steuerung zentraler Zeichenkanäle und ein Modul 4 zum Anschluß digitaler Verbindungsleitungen dargestellt sind. Jeder dieser Module weist einen Anschlußteil 2a, 3a bzw. 4a und eine Modulsteuereinheit 2b, 3b bzw. 4b auf. Der Modul 2 ist über Schmalband-Anschlußleitungen 6 mit einer Teilnehmer-Multiplexeinrichtung 7 verbunden, die durch Breitband-Teilnehmeranschlußleitungen 8 mit den — in der Zeichnung nicht dargestellten — Teilnehmereinrichtungen verbunden ist. Der Modul 3 dient zur Steuerung der zentralen Zeichenkanäle, die z. B. nach dem CCITT-Zeichengabeverfahren Nr. 7 betrieben werden.

Die Breitband-Teilnehmeranschlußleitungen 8 bestehen aus jeweils einer Glasfaser pro Teilnehmer, über die die Nachrichten im Wellenlängenmultiplex in beiden Richtungen übertragen werden.

Über den Modul 4 sind zu anderen Vermittlungsstellen führende Digital-Verbindungsleitungen 10, welche die Sprechwege bilden, an das Schmalband-Koppelnetz angeschlossen. Diese Verbindungsleitungen schließen auch den zentralen Zeichenkanal ein.

Der Integration von Breitbanddiensten mit dem schmalbandigen Nachrichtennetz dienen die Schalteinrichtungen 12, die in der Zeichnung durch einen gestrichelten Block angedeutet sind.

Es sind dies ein Modul 13 zum Steuern eines Breitband-Verteilkoppelnetzes 14, der aus einem Anschlußteil 13a und einer Modulsteuereinheit 13b besteht, sowie ein Modul 16 zum Steuern eines Breitband-Vermittlungskoppelnetzes 17, der ebenfalls aus einem Anschlußteil 16a und einer Modulsteuereinheit 16b besteht. Die beiden Module 13 und 16 können auch zu einem Steuermodul zusammengefaßt sein.

Durch das Breitband-Verteilkoppelnetz werden von einer größeren Anzahl zentral zur Verfügung stehender Fernsehprogramme einige wenige, z. B. drei, zu dem Teilnehmer durchgeschaltet, und zwar diejenigen, die er aus dem vorhandenen Angebot ausgewählt hat. Das Breitband-Verteilkoppelnetz 14, das im folgenden auch als TV-Koppelnetz bezeichnet wird, ist durch eine Steuerleitung 19 mit dem Modul 13 und durch Programm-Verteilleitungen 20 mit der Teilnehmer-Multiplexeinrichtung 7 verbunden. Die angebotenen Fernsehprogramme werden ihm über Leitungen 21 zugeführt.

Das Breitband-Vermittlungs-Koppelnetz 17 vermittelt die breitbandigen Bild- oder videosignale, die für Bildfernsprech-Verbindungen erforderlich sind. Es ist über eine Steuerleitung 22 mit dem Modul 16, über Breitband-Anschlußleitungen 23 mit dem Teilnehmer-Multiplexer 7 und über Breitband-Fernleitungen 24 mit anderen Breitband-Vermittlungs-Koppelnetzen verbunden. Im folgenden wird es auch als Bildfernsprech-Koppelnetz bezeichnet.

Diejenigen Teile des erfindungsgemäßen integrierten Nachrichtensystems, die der digitalen Schmalband-Vermittlungsstelle räumlich zugeordnet sind, sind durch eine Klammer 26 angedeutet.

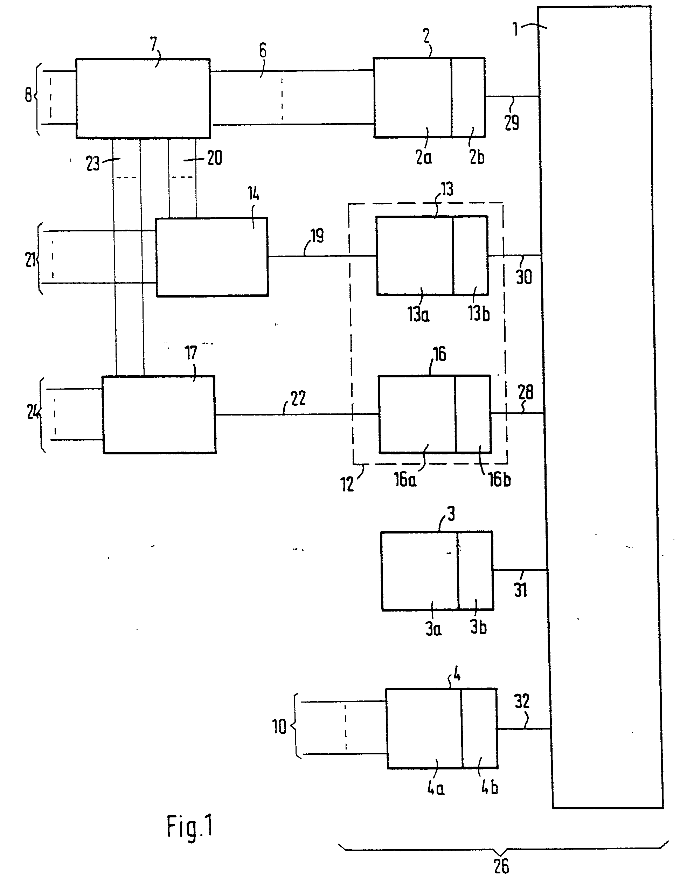

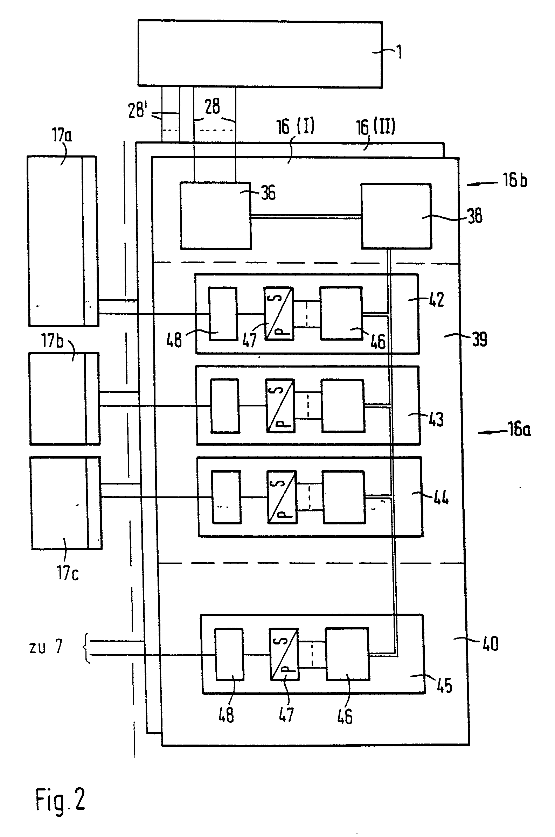

Einzelheiten des Moduls 16 zum Steuern von Bildfernsprech-Koppelnetze sind aus Figur 2 ersichtlich. Leitungen 28 und 28' verbinden es mit dem digitalen Schmalband-Koppelnetz 1, während die weiteren Module 2, 3, 4 und 13 über entsprechende Leitungen 29 bis 32 mit dem Koppelnetz 1 verbunden sind (vgl. auch Figur 1).

Die Modulsteuereinheit 16 ist aus Zuverlässigkeitsgründen gedoppelt; die beiden Einheiten sind mit 16 (I) und 16 (II) bezeichnet.

Jeder der beiden Module 16 (I) und 16 (II) weist eine Anschluß-Schnittstelle 36, eine Anschluß-Steuereinheit 38, eine oder mehrere Steuer-Baugruppen 39 und falls erforderlich eine Fernsteuer-Baugruppe 40 auf. Die Steuerbaugruppe 39 enthält drei untereinander gleiche Schaltungsanordnungen 42, 43 und 44, die jeweils ein Register 46, einen Parallel/Seriell-Wandler 47 sowie einen Leitungstreiber 48 aufweisen. Die Schaltungsanordnung 48 übermittelt die Steuersignale des Moduls 16 an ein Bildfernsprech-Durchgangs-Koppelnetz 17a, das in der Regel mehrstufig aufgebaut ist. Von der Schaltungsanordnung 43 werden die Steuersignale an ein Bildfernsprech-Teilnehmerkoppelnetz 17b übermittelt und die Schaltungsanordnung 44 steuert einen Bildfernsprech-Konzentrator 17c. Die Fernsteuer-Baugruppe 40 enthält eine oder mehrere Schaltungsanordnungen 45, die ebenfalls ein Register 46, einen Parallel/Seriell-Wandler 47 und einen Leitungstreiber 48 aufweist. Von diesem werden die Steuersignale zu der Teilnehmer-Multiplexeinrichtung 7 übermittelt. Eine Fernsteuerung von abgesetzten Breitband-Vermittlungseinrichtungen durch die Baugruppe 40 ist vor allem in der ersten Ausbaustufe des integrierten Nachrichtennetzes von Bedeutung.

Für die Realisierung von Breitbanddiensten der Bewegtbildkommunikation, insbesondere des Bildfernsprechdienstes, sowie der Verteilung von Fernseh-Programmen, in Fernmeldenetzen gelten folgende Grundsätze :

Bevorzugung der Digital-Signalübertragung,

Notwendigkeit hoher Übertragungsgeschwindigkeitn im Bereich von 34 bis 140 Mbit/s (je nach Art der A/D-Wandlung) verglichen mit anderen Kommunikationsdiensten,

Keine Vermittlung dieser Digitalsignale hoher Geschwindigkeit über die Koppelnetze von Digital-Vermittlungsstellen des Fernsprechnetzes oder eines künftigen ISDN-Netzes,

Notwendigkeit eigener Breitband-Vermittlungseinrichtungen verbunden durch Breitband-Übertragungssysteme für den Bildfernsprechdienst,

Notwendigkeit von Breitband-Verteilkoppelnetzen für die TV-Programmverteilung,

Aufbau eines flächendeckenden breitbandigen Kommunikationsnetzes für den Bildfernsprech-Dienst,

Abwicklung der zum Bildfernsprech-Dienst gehörigen Sprachverbindungen über das Fernsprechnetz.

Daraus ergibt sich die folgende Problemstellung, die durch das erfindungsgemäße Nachrichtensystem in technisch und wirtschaftlicher Weise vorteilhaft gelöst wird :

Anbindung der Breitband-Kommunikationseinrichtungen an die Kommunikationsinfrastruktur im Rahmen des gesamten Nachrichtennetzes,

Übermittlung und Verarbeitung der Zeichengabe- und Steuerinformation für die Abwicklung der Bildfernsprech-Verbindungen,

Übermittlung und Verarbeitung der Zeichengabe- und Steuerinformation für die Auswahl von Fernseh-Programmen und ggf. von Stereo-Hörfunkprogrammen.

Für die Realisierung des integrierten Nachrichtensystems sind folgende Merkmale des Fernmeldenetzes zweckmäßig :

Flächendeckende Digitalisierung des Fernsprechnetzes sowohl in den Vermittlungs als auch in den Übertragungseinrichtungen,

Einsatz breitbandiger dienstintegrierter digitaler Teilnehmeranschlüsse, wobei für die Teilnehmeranschlußleitungen vorzugsweise Glasfasern verwendet werden,

Verfügbarkeit eines Außerband-Signalisierkanals, eines sog. D-Kanals, beim digitalen Teilnehmeranschluß,

Abwicklung der Zeichengabe im digitalen Nachrichtennetz über zentrale Zeichenkanäle insbesondere unter Einsatz des CCITT-Zeichengabeverfahrens Nr. 7, einschließlich eines « User Part » für Breitbanddienste,

Ansatz von modularen rechnergesteuerten Vermittlungsstellen im Digital-Nachrichtennetz, mit der Möglichkeit des Hinzufügens neuer Funktionsmodule mit zusätzlichen Aufgaben, wie es sich bei einer System-12-Vermittlungsstelle einfach realisieren läßt.

Das Fernmeldenetz kann dann durch Einrichtungen für Breitbanddienste ergänzt werden :

Breitband-Koppelnetze zur Vermittlung der Bildsignale für den Bildfernsprechdienst,

Breitband-Übertragungsstrecken, insbesondere mit Glasfaserkabeln, zum Verbinden dieser Koppelnetze,

Breitband-Koppelnetze zum Verteilen von TV-Programmen, sowie ggf. von Stereo-Hörfunkprogrammen,

Breitband-Übertragungsstrecken, insbesondere mit Glasfaserkabeln, zum Zuführen der TV-Programme, sowie ggf. der Stereo-Hörfunkprogramme,

Die Zeichengabekanäle des digitalen Nachrichtennetzes werden für die Breitband-Vermittlungsdienste und Verteildienste mitbenutzt, um Steuer- und Zeichengabeinformation für die Verbindungsauswahl, die Koppelnetzeinstellung, die Programmwahl, den Betrieb, die Unterhaltung, u. a. zu übermitteln : a) der Zeichengabekanal D im Teilnehmeranschlußbereich, und b) die zentralen Zeichengabenkanäle zwischen den digitalen Fernsprechvermittlungsstellen.

Von den Modulen der digitalen Vermittlungsstelle werden für die Abwicklung der Breitband-Vermittlungsdienste- und Verteildienste einige mitbenutzt und andere neu hinzugefügt (vgl. Figur 1) :

Mitbenutzung der Module 2 für Digital-Teilnehmeranschluß (ausgestattet auch für Teilnehmer mit Breitbanddiensten)

Mitbenutzung der Module 4 für Digital-Fernleitungen (schmalbandig mit 64 Kbit/s in Digital-Multiplex-Systemen, z. B. DSMX2) zur Abwicklung der zur Bildfernsprechverbindung gehörenden Fernsprechverbindung,

Mitbenutzung der Module 3 zum Steuern zentraler Zeichengabekanäle für die Übermittlung der Signalisier- und Steuerinformation zwischen den Digital-Vermittlungsstellen,

Einsatz zusätzlicher Module 13 und 16 zum Steuern der Breitband-Verteilkoppelnetze 14 bzw. der Breitband-Vermittlungskoppelnetze 14 mit den Funktionenen der Wege- und Richtungsauswahl, Koppelnetzverwaltung und -Überwachung Durchschaltesteuerung usw..

Die Steuerung der Breitband-Vermittlungskoppelnetze und -Verteilkoppelnetze kann je nach Ausbaugröße und Funktionsumfang in einem oder mehreren Modulen realisiert werden. Aus Zuverlässigkeitsgründen ist es zweckmäßig die Steuermodule doppelt vorzusehen.

Das Schmalbandkoppelnetz 1 der Digital-Vermittlungsstelle wird für die interne Übermittlung der Zeichengabe- und Steuerinformation zwischen den Modulen mitbenutzt.

Das erfindungsgemäße integrierte Nachrichtensystem ist insofern besonders zweckmäßig, als es ein sinnvolles Einfügen der Einrichtungen zur Abwicklung breitbandiger Dienste (insbesondere der Bewegtbild-Kommunikation) in die schmalbandige digitale Kommunikationsinfrastruktur ermöglicht. Aus der gemeinsamen Nutzung von Einrichtungen zur Zeichengabe und Steuerung für die Schmalband- und Breitbanddienste ergibt sich ein wirtschaftlicher Gesamtaufbau. Die Anbindung der Breitband-Vermittlungskoppelnetze 17 und Verteilkoppelnetze 14 an die Schmalband-Digitalvermittlungsstellen 1, insbesondere des Systems 12, ist technisch zweckmäßig. Es werden eigene Kanäle, Protokolle, Verfahren und Einrichtungen für die Zeichengabe und Steuerung im Breitbandteil des Netzes eingespart. Durch das Mitbenützen des Schmalband-Koppelnetzes der Fernsprech-Vermittlungsstelle ist eine flexible Zuordnung der Teilnehmer zu den Breitband-Steuermodulen möglich. Daraus ergibt sich eine wirtschaftliche Realisierung in unterschiedlichen, von der Anzahl der Teilnehmer und der Anzahl und Art der jeweils genutzten Dienste gegebenen Ausbaustufen.

Ein integriertes Nachrichtensystem (BIGFON) schließt das schmalbandige Fernsprechnetz, ein Breitbandvermittlungsnetz 17 für den Bildfernsprechdienst und ein Breitband-Verteilkoppelnetz 14 für den Kabelfernsehdienst ein.

Die Schmalband-Vermittlungseinrichtungen weisen Digital-Koppelnetze 1 mit räumlich verteilten Steuerungen 2, 3, 4 usw. und einen Anschlußbaustein 16 auf, der die Steuereinrichtungen für das Breitband-Vermittlungsnetz 17 enthält, der mit dem schmalbandigen Digital-Koppelnetz 1 verbunden ist, und von dem die zum Abwickeln der Verbindungen in dem Breitband-Vermittlungsnetz erforderlichen Zeichengabe- und Steuerinformationen über das Schmalband-Nachrichtennetz übermittelt werden. Zweckmäßigerweise sind auch die Breitbandeinrichtungen digital ausgebildet, und es werden die Zeichengabe- und Steuerinformationen über ein Netz zentraler Zeichengabekanäle übermittelt.

## Patentansprüche

1. Integriertes Nachrichtensystem, das ein Schmalband-Nachrichtennetz mit Schmalband-Vermittlungseinrichtungen (1), ein Breitband-Vermittlungsnetz mit Breitband-Vermittlungseinrichtungen (17) und digitale Breitband-Verteilkoppelnetze mit Breitband-Verteileinrichtungen (14) enthält, wobei die Breitband-Vermittlungs- und -Verteileinrichtungen von den Schmalband-Vermittlungseinrichtungen aus mitgesteuert werden, dadurch gekennzeichnet, daß bei einer solchen Schmalband-Vermittlungseinrichtung, die ein Digital-Koppelnetz (1) und damit verbundene Anschlußbausteine (2, 4) aufweist und bei der die Einrichtungen zur Steuerung als räumlich verteilte Steuerung auf die Anschlußbausteine (2, 4) verteilt sind, ein weiterer mit dem Digital-Koppelnetz (1) verbundener Anschlußbaustein (16) vorhanden ist, der die Steuereinrichtungen für eine der Breitband-Vermittlungseinrichtungen (17) enthält und der zum Zwecke des Austausches der zum Abwickeln der Verbindungen im Breitband-Vermittlungsnetz erforderlichen Zeichengabe- und Steuerinformationen über das Digital-Koppelnetz (1) mit dem Schmalband-Nachrichtennetz in Verbindung steht.

2. Integriertes Nachrichtensystem nach Anspruch 1, dadurch gekennzeichnet, daß ein weiterer mit dem Digital-Koppelnetz (1) verbundener Anschlußbaustein (13) vorhanden ist, der die Steuereinrichtungen für eine der Breitband-Verteileinrichtungen (14) enthält und der zum Zwecke des Austausches der zum Abwickeln der Verbindungen im Breitband-Vermittlungsnetz erforderlichen Zeichengabe- und Steuerinformationen über das Digital-Koppelnetz (1) mit dem Schmalband-Nachrichtennetz in Verbindung steht.

3. Integriertes Nachrichtensystem nach Anspruch 1, dadurch gekennzeichnet, daß die zu einer über Breitband-Vermittlungseinrichtungen (17) aufgebauten Bildfernsprechverbindung gehörende Sprachverbindung über das Schmalband-Nachrichtennetz abgewickelt wird.

4. Integriertes Nachrichtensystem nach einem der vorhergehenden Ansprüche, dadurch gekennzeichnet, daß die Teilnehmer-Anschlußleitungen (8) nur jeweils eine Glasfaser enthalten, über die die Nachrichten im Wellenlängenmultiplex in beiden Richtungen übertragen werden.

5. Integriertes Nachrichtensystem nach einem der vorhergehenden Ansprüche, dadurch gekennzeichnet, daß die Zeichengabe- und Steuerinformationen über ein Netz zentraler Zeichengabekanäle übermittelt werden, die durch einen weiteren Anschlußbaustein (3) der Schmalband-Vermittlungseinrichtungen gesteuert werden.

6. Integriertes Nachrichtensystem nach einem der vorhergehenden Ansprüche, dadurch gekennzeichnet, daß die Breitband-Vermittlungseinrichtung (17) und die Breitband-Verteileinrichtung (14) räumlich mit der Schmalband-Vermittlungseinrichtung (26) zusammengefaßt sind.

7. Integriertes Nachrichtensystem nach einem der vorhergehenden Ansprüche, dadurch gekennzeichnet, daß die Breitband-Übertragungswege auf denselben Trassen wie die Übertragungswege des digitalen Fernsprechnetzes geführt sind.

8. Integriertes Nachrichtensystem nach einem der vorhergehenden Ansprüche, dadurch gekennzeichnet, daß die hierarchische Struktur des Breitband-Vermittlungsnetzes an die hierarchische Struktur des digitalen Fernsprechnetzes angepaßt ist.

**Claims**

1. Integrated communication system containing a narrowband communication network with narrowband switching facilities (1), a broadband switching network with broadband switching facilities (17), and digital broadband distribution switching networks with broadband distribution facilities (14), the broadband switching and distribution facilities being controlled from the narrowband switching facilities, characterized in that in the case of a narrowband switching facility which has a digital switching network (1) and terminal modules (2, 4) connected therewith and wherein the control facilities are spatially distributed to the terminal modules (2, 4), there is provided an additional terminal module (16) which is connected to the digital switching network (1), contains the control facilities for one of the broadband switching facilities (17), and is connected via the digital switching network (1) to the narrowband communication network for the exchange of the signalling and control information necessary to handle the calls in the broadband switching network.

2. An integrated communication system as claimed in claim 1, characterized in that there is provided an additional terminal module (13) which is connected to the digital switching network (1), contains the control facilities for one of the broadband distribution facilities (14), and is connected via the digital switching network (1) to the narrowband communication network for the exchange of the signalling and control information necessary to handle the calls in the broadband switching network.

3. An integrated communication system as claimed in claim 1, characterized in that the voice call associated with a video call set up via broadband switching facilities (17) is handled via the narrowband communication network.

4. An integrated communication system as claimed in any one of the preceding claims, characterized in that each of the subscriber lines (8) contains only one optical fiber over which the information is transmitted in both directions using wavelength-division multiplexing.

5. An integrated communication system as claimed in any one of the preceding claims, characterized in that the signalling and control information is transferred through a network of common signalling channels which are controlled by an additional terminal module (3) of the narrowband switching facilities.

6. An integrated communication system as claimed in any one of the preceding claims, characterized in that the broadband switching facility (17) and the broadband distribution equipment (14) are spatially united with the narrowband switching facility (26).

7. An integrated communication system as claimed in any one of the preceding claims, characterized in that the broadband transmission paths run along the same routes as the transmission paths of the digital telephone network.

8. An integrated communication system as claimed in any one of the preceding claims, characterized in that the hierarchical structure of the broadband switching network is adapted to the hierarchical structure of the digital telephone network.

## Revendications

1. Système de communication intégré comprenant un réseau de communication à bande étroite comportant un agencement de commutation à bande étroite (1), un réseau de commutation à large bande comportant des agencements de commutation à large bande (17) et des réseaux numériques de distribution à large bande comportant des agencements de distribution à large bande (14), les agencements de distribution et de commutation à large bande étant commandés à partir de l'agencement de commutation à bande étroite, caractérisé en ce que, un tel agencement de commutation à bande étroite comportant un réseau de commutation numérique (1) et des équipements terminaux (2, 4) connectés à ce dernier, et les agencements de commande étant répartis entre les équipements terminaux (2, 4), pour une commande spatialement répartie, il est prévu un équipement terminal additionnel (16) connecté au réseau de commutation numérique (1), lequel contient les agencements de commande pour un des agencements de commutation à large bande (17) et est en liaison avec le réseau de communication à bande étroite, par le réseau de commutation numérique (1), aux fins d'échanges des informations de signalisation et de commande nécessaires au déroulement des communications dans le réseau de commutation à large bande.

2. Système de communication intégré conforme à la revendication 1, caractérisé en ce qu'il est prévu un équipement terminal additionnel (13) connecté au réseau de commutation numérique (1), lequel contient les agencements de commande pour un des agencements de distribution à large bande (14) et est en liaison avec le réseau de communication à bande étroite, par le réseau de commutation numérique (1), aux fins d'échanges des informations de signalisation et de commande nécessaires au déroulement des communications dans le réseau de commutation à large bande.

3. Système de communication intégré conforme à la revendication 1, caractérisé en ce que la communication téléphonique appartenant à une communication vidéophonique établie par l'agencement de commutation à large bande (17) est traitée par l'intermédiaire du réseau de communication à bande étroite.

4. Système de communication intégré conforme à l'une quelconque des revendications précédentes, caractérisé en ce que chacune des lignes d'abonnés (8) comporte une fibre optique seulement sur laquelle l'information est transmise dans les deux sens par multiplexage à répartition de longueur d'onde.

5. Système de communication intégré conforme à l'une quelconque des revendications précédentes, caractérisé en ce que l'information de signalisation et de commande est transférée par un réseau de voies de signalisation commune, qui sont commandées par un équipement terminal additionnel (3) de l'agencement de commutation à bande étroite.

6. Système de communication intégré conforme à l'une quelconque des revendications précédentes, caractérisé en ce que l'agencement de commutation à large bande (17) et l'agencement de distribution à large bande (14) sont situés au même endroit que l'agencement de commutation à bande étroite (26).

7. Système de communication intégré conforme à l'une quelconque des revendications précédentes, caractérisé en ce que les trajets de transmission à large bande s'étendent le long des mêmes routes que les trajets de transmission du réseau téléphonique numérique.

8. Système de communication intégré conforme à l'une quelconque des revendications précédentes, caractérisé en ce que la structure hiérarchique du réseau de commutation à large bande est adaptée à la structure hiérarchique du réseau téléphonique numérique.

Fig.1

Fig.2